# EUROPÄISCHE PATENTANMELDUNG

(11) **EP 1 026 410 A2**
(43) Veröffentlichungstag der Anmeldung: **09.08.2000**
(21) Anmeldenummer: 99125781.7
(22) Anmeldetag: 23.12.1999
(51) Int. Cl.: F16B 7/04

(54) **Verbindungsstück aus faserverstärktem Kunststoff mit enthaltenem Adapter für die Aufnahme und Befestigung von Profilen**

(30) Priorität: 03.02.1999 DE 19904246
(71) Anmelder: Belaew Sergej, 88371 Ebersbach-Musbach (DE)
(72) Erfinder: Belaew Sergej, 88371 Ebersbach-Musbach (DE)

(57) **Zusammenfassung**

Verbindungsstück aus faserverstärktem Kunststoff, bestehend aus einem rohrartigem Körper (2) mit zumindest an einem Ende dieses Körpers enthaltenem Adapter (3) für die Aufnahme und Befestigung von Profilen.

Der Körper (2) und Adapter (3) sind einstückig ausgebildet.

Der Adapter (3) ist schlaufenartig mit Radien um das Profil und die Befestigungselemente (Bolzen 5, 6) geführt, so dass die Bolzen (5, 6) in den aussen liegenden Schlaufen angeordnet sind. Das zu befestigende Profil wird in der innen liegenden Schlaufe (9) mittels Verbindungsgliedes (4) zwischen den Bolzen (6) und dem einen Exzenter aufweisenden Bolzen (5) geklemmt.

## Beschreibung

Die Erfindung bezieht sich auf einen Verbindungsstück aus faserverstärcktem Kunststoff, bestehend aus einem rohrartigem Körper und zumindest an einem Ende dieses Körpers befindlichen Adapter für die Aufnahme und Befestigung von Profilen.

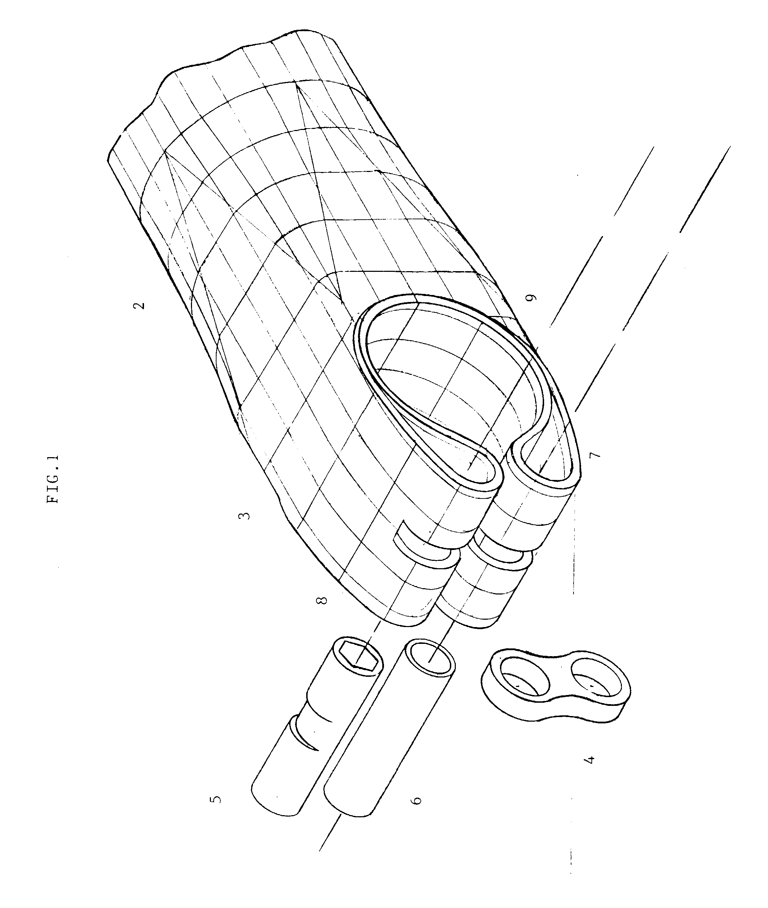

Es ist bereits bekannt muffenlose Verbindungen zwischen quer zueinander befindlichen Profilen aus faserverstärkten Kunststoffen herzustellen. Patent DE 69121082T2(Fahrradrahmen) Fig.1;2;3 beschreibt so eine Verbindung. Insbesondere die Verbindung zwieschen Oberrohr(12), Sattelrohr(20) und Sattelstützeaufnahme(29). Die Klemmung des Profils(Sattelstütze) erfolgt hier mittels einer Sitzrohrumfassenden metallischen Klemmschelle(27) oder einer einlaminierten teilgeschlitzten Hülse(27) aus Metall mit Fortzätzen(28).

Ferner ist es auch bekannt bei der Verbindungen von runden Profilen vorteilhafte Eigenschaften eines Bandes (aus Metall Patent DE 4209331C2; DE 19635 677A1; U.S.3972639; oder aus Textill U.S.5464135) auszunutzen; nämlich bei dem geringen Materialeinsatz hohe Spannkräfte zu übertragen in dem das Band schlaufenartig rund um das Profil und die Befestigungselemente verlegt wird.( Insbesondere Patent DE 4209331 C2).

In allen diesen Patenten wird die Bandschelle als separater Teil der Befestigung eingesetzt, die mit einem Treger(16) (Pat. U.S.3972639), oder mit einem Gegenhalter in Form einer Platte (Pat.DE42093310C2), oder in Form einer konischen Hülse(7) (Pat. DE19635677A1) oder Untersatzes(10) (Pat. U.S. 5464135) eine Verbindung darstellt.

Ein Nachteil vorgenannter Verbindungsmöglichkeiten ist die Vielzahl von Einzelnteilen.

Es ist auch bekannt das die Kohlefaser (auch Kevlar, Aramid, Vectran et.c.) in Längsrichtung der Fasern hohe Zugfestigkeit aufweisen. Deswegen ist die Aufgabe der Erfindung ein Verbindungsstück aus faserverstärktem Kunststoff mit Adapter aus einem Stück zu gestalten, so dass bei der Klemmung eines Profils die auftretenden Kräfte in der längsverlaufenden b.z.w. tangenzialen Richtung zu der Fasern wirken.

Erfindungsgemäss wird diese Aufgabe durch die in den Patentansprüchen 1 und 2 aufgeführten Merkmalen gelöst. Fig.1 zeigt ein Ausführungsbeispiel der Erfindung. Hier sind Körper(2) und Adapter(3) einstückig ausgebildet. Der Adapter(3) ist schlaufenartig mit Radien um das Profil und die Befestigungselemente (Bolzen5,6) geführt,so dass die Bolzen(5,6) in den aussenliegenden Schlaufen angeordnet sind. Das zubefestigende Profil wird in der innenliegenden Schlaufe(9) mittels Verbindungsgliedes(4) zwieschen den Bolzen(6) und dem einen Exzenter aufweisenden Bolzen(5) geklemmt.

Es ist möglich an einem Verbindungsstück mehrere Adapter zu integrieren, aber auch die Zahl der Bolzen und der Verbindungsglieder kann variabel sein.

### (Bezugzeichenliste)

(1) - Verbindungsstück bestehend aus Körper und Adapter.
(2) - Körper aus faserverstärktem Kunststoff(Hoh1 oder mit Kern).
(3) - Adapter aus faserverstärktem Kunststoff bestehend aus drei Schlaufen.
(4) - Verbindungsglied(Lasche) aus Metall; verbindet die Bolzen.
(5) - Bolzen mit Innensechskant für die Drehung, und mit der in der Mitte ausgeführten Nut für exzentrische Klemmung.
(6) - Runder Bolzen.
(7,8)-Adapterbildende Aussenschlaufen für die Aufnahme und Befestigung von Profil.
(9) - Innen integrierte Schlaufe für die Aufnahme von Profil.

Das Verbindungsglied(4) und die Bolzen(5,6) werden in die Schlaufen(7,8) eingeführt.

## Patentansprüche

1. Verbindungsstück (1) aus faserverstärktem Kunststoff, bestehend aus einem rohrartigem Körper (2) mit zumindest an einem Ende dieses Körpers (2) enthaltenem Adapter (3) für die Aufnahme und Befestigung von Profilen, dadurch gekennzeichnet, dass der einstückig am rohrartigen Körper (2) angeformte Adapter (3) bandförmig ausgebildet und mit seinen beiden Enden an zwei einander diametral gegenüberliegenden Bereichen auf dem Umfang des Übergangsbereiches des rohrartigen Körpers in das eine Ende des Körpers (2) übergeht, wobei der bandförmige Adapter (3) schlaufenartig um das Profil geführt ist und aus mindestens drei Schlaufen besteht, von denen die beiden außen liegenden Schlaufen (7, 8) zur Aufnahme zweier Bolzen (5, 6) der Klemmeinrichtung (4 - 6) und eine innen liegende (9) zur Aufnahme des Profils dient.

2. Verbindungsstück aus faserverstärktem Kunststoff gemäß Anspruch 1, dadurch gekennzeichnet, dass das zu befestigende Profil mittels zweier Bolzen (5, 6), die in den beiden außen liegenden Schlaufen (7, 8) angeordnet sind, und einem Verbindungsglied (4) geklemmt wird, wobei die Klemmung durch Drehen eines einen Exzenter aufweisenden Bolzen (5) erfolgt.
